# EUROPEAN PATENT SPECIFICATION

(11) **EP 2 509 710 B1**
(45) Date of publication and mention of the grant of the patent: **21.01.2015**
(21) Application number: 10836633.7
(22) Date of filing: 08.12.2010
(51) Int. Cl.: B01J 13/00, B01J 13/22, B82B 3/00, C09D 5/00

(54) **POLYMERIC HYBRID ORGANOMETALLOGLASS**
POLYMERES ORGANOMETALLISCHES HYBRIDGLAS
VERRE ORGANOMÉTALLIQUE HYBRIDE POLYMÈRE

(30) Priority: 08.12.2009 US 267752 P
(43) Date of publication of application: 17.10.2012
(73) Proprietor: Envont LLC, Bonita Springs, FL 34135-1807 (US)
(72) Inventor: TUCKER, Gary, D., III, Naples Florida 34120 (US); DELUCA, James, Joseph, Parma Ohio 44129 (US); FITTS, Todd, M., Naples Florida 34110 (US)
(74) Representative: Wilson, Alan Stuart
(86) International application number: PCT/US2010/059521
(87) International publication number: WO 2011/072045

(56) References cited:
- US-A1- 2006 041 096
- US-A1- 2008 166 478
- US-A1- 2009 162 560
- US-A1- 2009 163 647
- US-A1- 2009 163 647
- US-A1- 2009 163 656
- US-B2- 7 451 619
- ALAIN WALCARIUS: 'Electrochemical Applications of Silica-Based Organic-Inorganic Hybrid Materials' CHEM. MATER. vol. 13, no. 10, 2001, pages 3351 - 3372

## Description

### TECHNICAL FIELD

This invention relates to an aqueous molecular hybrid organic/inorganic glass composition and polymeric hybrid organometalloglass coatings formed from the composition, with polymeric molecular hybrid nanocrystals optionally self-assembled in the composition and integrated in the coatings.

Document US 2009/163647 relates to hybrid metal oxides prepared from a composition comprising a metal oxide, to which a peroxide is added. The composition can be applied to a substrate and cured.

Documents US 2009/162560 and US 2009/163656 have similar disclosures.

### SUMMARY

In one aspect, forming a polymerizable hybrid organometalloglass composition includes forming an aqueous, acidic colloid; processing the aqueous, acidic colloid to form an aqueous, alkaline colloid; processing the aqueous, alkaline colloid to remove chloride ions from the colloid and to form an aqueous, alkaline amorphous organo/siloxy/metal hydroxide colloid; combining a peroxide-based solution with the aqueous, alkaline amorphous organo/siloxy/metal hydroxide colloid to form a metal peroxide suspension; and processing the metal peroxide suspension to form a polymerizable hybrid organometalloglass composition. The aqueous, acidic colloid includes an organic monomer, a silicon-containing compound, and an organometallic compound. The alkaline colloid includes an amorphous metal hydroxide. The polymerizable hybrid organometalloglass composition may be applied to a substrate and polymerized to form a high molecular weight, covalently bonded polymeric hybrid organometalloglass coating on the substrate.

In another aspect, a polymerizable hybrid organometalloglass composition includes an aqueous suspension having siloxy groups, organic moieties, and amorphous metal hydroxide, and the suspension is capable of polymerizing to form a polymeric hybrid organometalloglass with a hardness between about 0.1 and about 7 GPa or between about 2.5 and about 7 GPa. In some implementations, the suspension further includes peroxy groups and/or nanoparticulates. Polymerizing can include forming a condensation product on a surface of a substrate.

In another aspect, a material includes a high molecular weight polymeric matrix. The matrix includes metal atoms, organic moieties, oxygen, and silicon, covalently bound together to form a coating with a hardness between about 0.1 and 7 GPa or between 2.5 and 7 GPa. In some implementations, the matrix further includes nanoparticulates.

Other implementations may include one or more of the following features. In some cases, forming the acidic colloid, processing the acidic colloid, forming the alkaline colloid, processing the alkaline colloid, forming the alkaline amorphous organo/siloxy/metal hydroxide colloid, forming the metal peroxide suspension, or any combination thereof can include heating the colloid, the suspension, or any precursor used in forming the colloid or the suspension. For example, forming the acidic colloid can include heating an acidic solution including an organic monomer, an organometallic compound, or a combination thereof. Heating can include heating at a temperature above room temperature at atmospheric pressure, above atmospheric pressure, or below atmospheric pressure. In some cases, heating includes autoclaving. Processing the alkaline colloid can include cooling the colloid, for example, at atmospheric pressure, above atmospheric pressure, or below atmospheric pressure. Cooling the colloid can include autoclaving the colloid. In some implementations, processing the metal peroxide suspension includes forming self-assembled nanocrystals in the suspension.

In some implementations, processing the aqueous, alkaline colloid to remove chloride ions from the colloid includes removing substantially all of the chloride ions from the colloid. For example, processing the aqueous, alkaline colloid to remove chloride ions from the colloid can include vacuum filtration and/or centrifuging the colloid and reconstituting the colloid repeatedly until a concentration of chloride ions in the supernatant is less than 2 ppm or less than 1 ppm. In some cases, reconstituting the colloid includes reconstituting the colloid in the presence of an ion exchange resin.

The polymerizable hybrid organometalloglass composition can be applied to a substrate and polymerized to form a polymeric hybrid organometalloglass coating on the substrate. In some cases, the substrate includes a multiplicity of nanoparticles. The polymerizable hybrid organometalloglass composition can be spray-dried on the particles (e.g., nanoparticles) and allowed to polymerize to form particles coated with polymeric hybrid organometalloglass. In certain cases, a polymerizable hybrid organometalloglass is spray-dried (e.g., at elevated temperatures) and then processed to form polymeric hybrid organometalloglass particles. The polymeric hybrid organometalloglass particles and the coated particles may be processed (e.g., ground to form a powder or nanopowder, classified, etc.) for use in a variety of applications. Polymerizing the hybrid organometalloglass composition can include allowing the composition to dry in air at room temperature and atmospheric pressure, or curing the composition under heat or pressure or in the presence of radiation, such as visible or ultraviolet radiation.

In some implementations, one or more additives may be combined with the acidic colloid, the alkaline colloid, the metal peroxide suspension, or the polymerizable hybrid organometalloglass composition. For example, forming or processing the acidic colloid or alkaline colloid may include combining an additive with the acidic colloid, the alkaline colloid, or one or more precursors thereof (e.g., to an acidic organic monomer solution). Forming the alkaline amorphous organo/siloxy/metal hydroxide colloid may include combining an additive with the alkaline amorphous organo/siloxy/metal hydroxide colloid or a precursor thereof. Forming or processing the metal peroxide suspension may include combining an additive with the metal peroxide suspension or a precursor thereof. Forming or processing the polymerizable hybrid organometalloglass composition may include combining an additive with the polymerizable hybrid organometalloglass composition or a precursor thereof. The additives can be selected to provide or enhance desired properties (e.g., self-cleaning, photocatalytic, anti-bacterial, hydrophobic/hydrophilic, conductivity, etc.) of the composition or coating. The additive can be, for example, an organic monomer, a silicon-containing compound, an organometallic compound, a wetting agent, a curing agent, a protein (e.g., enzyme), or a nanoparticulate. In one example, an additive includes one or more proteins (i.e., enzymes) selected from the group consisting of lysostaphin and lysozyme. The nanoparticulate can be, for example, a nanostructured carbon. Implementations include a polymeric hybrid organometalloglass coating, a substrate coated with a polymeric hybrid organometalloglass coating, a bulk material including a hybrid organometalloglass composition, and a device including a hybrid organometalloglass composition or a polymeric hybrid organometalloglass coating.

The polymerizable hybrid organometalloglass composition described herein may be tailored to yield coatings with selected chemical and physical properties combined with a desired hardness associated with the glass-like nature of the composition. A thickness of the coating may be determined by factors including composition and application process, and may range from monolayer thickness in the nanometer range up to any desired thickness formed by, for example, multiple layers in a lamination process. In some cases, the polymerizable hybrid organometalloglass composition is combined with a substrate material to provide selected chemical and physical properties to the bulk substrate material.

### BRIEF DESCRIPTION OF THE DRAWINGS

FIG. 1 is a flow chart that shows steps in a process to form a polymeric hybrid organometalloglass coating on a substrate.
FIG. 2 is a flow chart that shows steps in a portion of the process of FIG. 1 in more detail.
FIG. 3 is a flow chart that shows steps in a portion of the process of FIG. 1 in more detail.
FIG. 4A is a flow chart that shows steps in a portion of the process of FIG. 1 in more detail.
FIG. 4B is a flow chart that shows steps in a portion of the process of FIG. 1 in more detail.
FIG. 5 is a flow chart that shows steps in a portion of the process of FIG. 1 in more detail.

### DETAILED DESCRIPTION

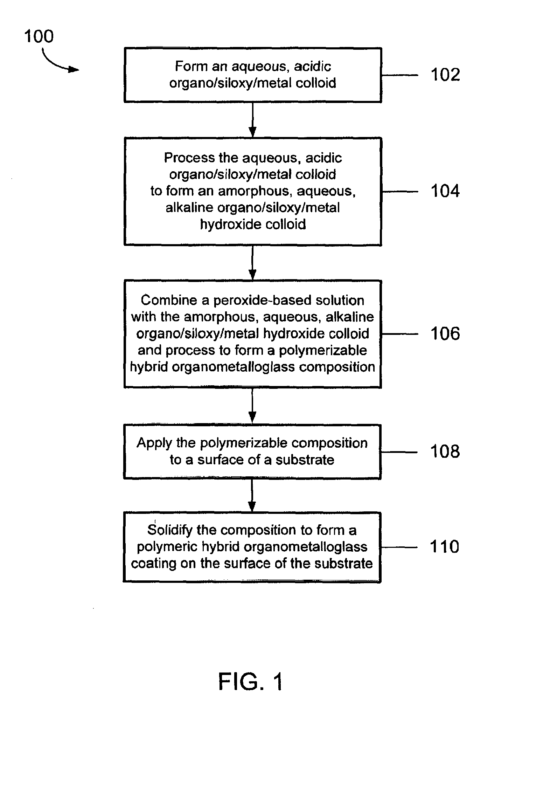

Referring to FIG. 1, procedure 100 includes steps in the formation of a polymeric hybrid organometalloglass coating on a surface of a substrate. In step 102, an aqueous, acidic organo/siloxy/metal colloid is formed. The aqueous, acidic organo/siloxy/metal colloid formed in step 102 is processed in step 104 to form an amorphous, aqueous, alkaline organo/siloxy/metal hydroxide colloid. In step 106, the amorphous, aqueous alkaline organo/siloxy/metal hydroxide colloid is combined with a peroxide-based solution and processed to form a polymerizable organo/siloxy/nanocrystal composition. The polymerizable organo/siloxy/nanocrystal composition is applied to a surface in step 108, and the polymerizable composition is solidified in step 110 to form a polymeric hybrid organometalloglass coating on the surface of the substrate.

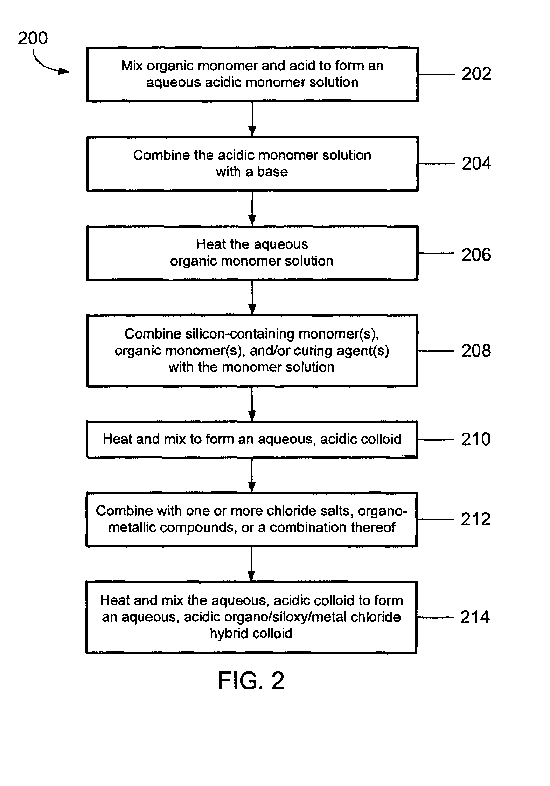

Steps 102-110 of procedure 100 are described in more detail in FIGS. 2-5. One or more selected steps illustrated FIGS. 2-5 may be omitted, based on desired physical and chemical characteristics of the coating to be formed in step 110. That is, one or more of steps illustrated in FIGS. 2-5 may be optional. Examples of optional steps include steps 210, 408, 412, 414, and 418. In some cases, the order of the steps illustrated in FIGS. 2-5 may be changed, or combinations of steps may be performed and resulting products combined. For example, referring to FIG. 2, a product formed by step 202 and followed by step 212 may be combined in step 214 with a product of steps 202-210.

In FIGS. 2-5, steps that include heating may include heating or autoclaving at increased temperatures (e.g., temperatures above room temperature) at atmospheric pressure, above atmospheric pressure, or below atmospheric pressure. Steps that include cooling may include autoclaving at reduced temperatures (e.g., temperatures below room temperature and above the freezing point) at atmospheric pressure or above or below atmospheric pressure. Autoclaving, and the temperature and pressure of the autoclaving process, may be selected to increase or decrease the molecular weight and the amount of branching in the polymeric coating formed in step 110. For example, autoclaving at a higher temperature yields a polymeric coating with a lower molecular weight and more branching (e.g., crosslinking) than autoclaving at a lower temperature, whereas autoclaving at a higher pressure yields a polymeric coating with a higher molecular weight and less branching than autoclaving at a lower pressure.

Referring to FIG. 2, procedure 200 includes steps in the formation of the aqueous, acidic organo/siloxy/metal colloid of step 102. In step 202, a water-soluble organic (e.g., carbon-containing) monomer and an acid are mixed to form an acidic aqueous solution.

The water-soluble organic compound may be an alkane (RH), alkene (R₂C=CR₂), alkyne (RC≡CR), alcohol (ROH), aldehyde (RCHO), carboxamide, (RCONR₂), amine (e.g., primary amine (RNH₂), secondary amine (R₂NH), tertiary amine (R₃N)), quaternary ammonium ion (R₄N⁺), azo compound (diimide) (RN₂R), carbonate ester (ROCOOR), carboxylate (RCOO⁻), carboxylic acid (RCOOH), cyanate (ROCN), thiocyanate (RSCN), ether (ROR), ester (RCOOR), imine (e.g., primary ketimine (RC(=NH)R), secondary ketimine (RC(=NR)R), primary aldimine (RC(=NH)H), secondary aldimine (RC(=NR)H)), isocyanide (RNC), isocyanate (RNCO), isothiocyanate (RNCS), ketone (RCOR), nitro compound (RNO₂), benzene derivative (RC₆H₅), phosphine compound (R₃P), phosphodiester phosphate (HOPO(OR)₂), phosphonic acid (RP(=O)(OH)₂), phosphate (ROP(=O)(OH)₂), pyridine derivative (RC₅H₄N, sulfide (RSR), sulfone (RSO₂R), sulfonic acid (RSO₃H), sulfoxide, sulfinyl (RSOR), and thiol sulfhydryl (RSH), where each R is independently an organic moiety that may include one or more of the same or different functional groups, such as hydroxyl groups or halogens (e.g., chlorine). Examples of the water-soluble organic monomer includes pentaerythritol, dimethylol propionic acid, neopentylglycol, and 2,2, bis (hydroxymethyl)-propionic acid.

Acids used in step 202 may include mineral acids such as hydrogen halides (HCl, HBr, HI), halogen oxoacids, hypochloric acid, chloric acid, perchloric acid, periodic acid and corresponding compounds of bromine and iodine, sulfuric acid (H₂SO₄), fluorosulfuric acid, nitric acid (HNO₃), phosphoric acid (H₃PO₄), fluoroantimonic acid (HSbF₆), fluoroboric acid (HBF₄), hexafluorophosphoric acid (HPF₆), chromic acid (H₂CrO₄), sulfonic acids (e.g., methanesulfonic acid (mesylic acid, MeSO₃H), ethanesulfonic acid (esylic acid, EtSO₃H), benzensulfonic acid (besylic acid, PhSO₃H), p-toluenesulfonic acid (tosylic acid, CH₃C₆H₄SO₃H), trifluoromethanesulfonic acid (triflic acid, CF₃SO₃H)), carboxylic acids (e.g., acetic acid CH₃COOH, glacial acetic acid, citric acid (3-hydroxypentanedioic acid), formic acid (methanoic acid, HCOOH), gluconic acid (C₆H₁₂O₇ and HOCH₂(CHOH)₄COOH, one of the 16 stereoisomers of 2,3,4,5,6-pentahydroxyhexanoic acid), lactic acid (2-hydroxypropanoic acid, C3H6O3), oxalic acid (C₂O₂(OH)₂ or HOOCCOOH), tartaric acid (2,3-dihydroxysuccinic acid), vinylogous carboxylic acids such as ascorbic acid), and Meldrum's acid (2,2-dimethyl-1,3-dioxane-4,6-dione). The molarity of the acid can be selected from a range of 5M to 10M. The organic monomer can be combined with the acid in an amount from 0.01 to 50% by weight of the acid. In an example, the organic monomer is added in an amount of 5% by weight of the acid. The pH of the aqueous organic monomer solution may be less than 1. In some cases, step 202 includes autoclaving the organic monomer solution at increased or reduced pressures.

In step 204, the organic monomer solution is combined with a base. Examples of bases that can be used during neutralization and alklalinization include hydroxides such as NH₄OH, KOH, Ba(OH)₂, CsOH, NaOH, Sr(OH)₂, Ca(OH)₂, LiOH, RbOH, Mg(OH)₂, and Al(OH)₃, or a combination thereof. Non-hydroxide bases, such as NaHCO₃ and CaCO₃, may also be used. The base can be added in the form of a solid (e.g., in an amount between 0.01 and 25% by weight of the organic monomer solution) or in the form of a liquid (e.g., a solution). After addition of the base, the solution may still be acidic.

In step 206, the organic monomer solution from step 204 is heated at a temperature up to 500°C. For example, the solution can be heated at 150°C. In some cases, the solution is heated for a length of time between 2 hrs and 8 hrs.

In step 208, one or more additives (e.g., silicon-containing monomers, organic monomers, curing agents, or any combination thereof) is combined with the heated organic monomer solution. The total weight of the additives may account for 0.01 wt% to 15 wt% of the mixture formed in step 208. In some cases, for example, the total weight of the additives combined with the organic monomer solution from step 206 is 2.5 to 5 wt% of the mixture formed in step 208.

The silicon-containing monomers or compounds added in step 208 may include, for example, alkoxysilanes such as tetramethoxysilane and tetraethoxysilane, dipodal silanes such as bis(trimethoxysilylpropyl)-amine, bis(triethoxysilyl)methane, silsesquioxanes, siloxane, disiloxane, polydimethylsiloxanes, disilylmethylene, disilylethylene, silphenylene, metal silanolates, silazanes (e.g., (RO)₃Si-CH₂CH₂CH₂X where X is F, Cl, C≡N, NH₂, SH, hybrid acetate-alkene, or epoxide, and R is an organic moiety), and disilazanes. Suitable silanes may have substituents including one or more allyl, alkynl, phenyl, hydroxyl, phenoxy, and acetoxy groups, cyclic or heterocyclic groups (including, for example, trimers, tetramers, and pentamers), halogens, ketones, azides, and isocyanates. Suitable silazanes include, for example, 1,3-di-n-propyltetramethyldisilazane and 1,1,3,3-tetramethyldisilazane. Some suitable silicon-containing monomers, including bis(triethoxysilyl)methane, 1,1,3,3-tetramethyl-1,3-diethoxydisiloxane, tetraethoxysilane, hexachlorodisiloxane, and octachlorotrisiloxane, form low molecular weight cyclic ring compounds that are soluble in aqueous solution. Other suitable silicon-containing compounds include metal silanoates, such as beryllium aluminum silicate, lithium aluminum silicate, aluminum silicate, lithium trimethylsilanolate, bis(trimethylsilyl) telluride, trimethylsilyltrimethyl germanium.

The organic monomers added in step 208 may include monomers described with respect to step 202, for example 2-hydroxyethyl acrylate or any other water-soluble organic monomer. The curing agents added in step 208 may include, for example, silazanes, disilazanes, and other silicon-containing compounds such as, for example, tetrakis (trimethylsiloxy) titanium and/or zirconium compounds. Calcium hydroxide may also function as a curing agent.

In certain cases, one or more of the silicon-containing monomers may be combined with a peroxide-based solution before addition in step 208. The peroxide-based solution may include, for example, hydrogen peroxide, benzoyl peroxide, tert-butyl hydroperoxide, 3-chloroperoxybenzoic peroxide, di-tert-butyl peroxide, dicumyl peroxide, methylethyl ketone peroxide, [dioxybis(1-methylpropylidene)] bishydroperoxide, (1-methylpropylidene)bishydroperoxide, peracetic acid, or any combination thereof. The peroxide-based solution may be 35 to 50% by weight of peroxide in aqueous solution. The amount of peroxide-based solution combined with the silicon-containing monomer may be, for example, from 0.1% by weight of the silicon-containing monomer to 200% by weight of the silicon-containing monomer.

In some embodiments, one or more additives may be may be combined with the solution formed in step 204 at room temperature, and then heated in step 210 (i.e., the order of steps 206 and 208 may be interchanged).

In step 210, the mixture formed in step 208 is heated to form an aqueous, acidic colloid. Heating may include, for example, refluxing the mixture. After refluxing begins, the mixture may be heated between 150°C and 500°C for a length of time between 2 hrs and 10 hrs. Heating may also include autoclaving under increased or reduced pressure. After heating, the mixture may be agitated. For example, the mixture may be agitated for a length of time between 8 hrs and 72 hrs after heating. During this time, the mixture may cool to room temperature.

In step 212, one or more organometallic compounds, one or more chloride salts, or any combination thereof, is added to the colloid formed in step 210. Organometallic compounds added in step 212 can include, for instance, metal alkoxides such as methoxides, ethoxides, methoxyethoxides, butoxides, isopropoxides, pentoxides, etc., as well as pentadionates, proprionates, acetates, hydroxides, hydrates, stearates, oxalates, sulfates, carbonates, and/or acetylacetonates, of metals such as zinc, tungsten, titanium, tantalum, tin, molybdenum, magnesium, lithium, lanthanum, indium, hafnium, gallium, iron, copper, boron, bismuth, antimony, barium, zirconium, zinc, yttrium, vanadium, tin, silver, platinum, palladium, samarium, praseodymium, nickel, neodymium, manganese, magnesium, lithium, lanthanum, indium, holmium, hafnium, gallium, gadolinium, iron, europium, erbium, dysprosium, copper, cobalt, chromium, cesium, cerium, aluminum, barium, beryllium, cadmium, calcium, iridium, arsenic, germanium, gold, lutetium, niobium, potassium, rhenium, rhodium, rubidium, ruthenium, scandium, selenium, silicon, strontium, tellurium, terbium, thulium, thorium, ytterbium, and yttrium. An example of an organometallic compound is silver pentadionate.

Chloride salts added in step 212 may include tetrachloride salts such as, for example, SiCl₄, TiCl₄, GeCl₄, VCl₄, GaCl₄, ZrCl₄, SnCl₄, TeCl₄, HfCl₄, ReCl₄, IrCl₄, PtCl₄, or other chloride salts such as, for example, Na₂PtCL₆, CCl₃CO₂Na, Na₂PdCl₄, NaAuCl₄, NaAlCl₄, ClNaO₃, MgCl₂, AlCl₃, POCl₃, PCl₅, PCl₃, KCl, MgKCl₃, LiCl·KCl, CaCl₂, FeCl₂, MnCl₂, Co(ClO₄)₂, NiCl₂, Cl₂Cu, ZnCl₂, GaCl₃, SrCl₂, YCl₃, MoCl₃, MoCl₅, RuCl₃, RhCl₃, PdCl₂, AsCl₃, AgClO₄, CdCl₂, SbCl₅, SbCl₃, BaCl₂, CsCl, LaCl₃, CeCl₃, PrCl₃, SmCl₃, GdCl₃, TbCl₃, HoCl₃, ErCl₃, TmCl₃, YbCl₃, LuCl₃, WCl₆, ReCl₅, ReCl₃, OsCl₃, IrCl₃, PtCl₂, AuCl, AuCl₃, Hg₂Cl₂, HgCl₂, HgClO₄, Hg(ClO4)₂, TlCl₃, PbCl₂, BiCl₃, GeCl₃, HfCl₂O, Al₂Cl₆, BiOCl, [Cr(H₂O)₄Cl₂]Cl₂·2H₂O, CoCl₂, DyCl₃·6H₂O, EuCl₂, EuCl₃·6H₂O, NH₄AuCl₄·xH₂O, HAuCl₄·xH₂O, KAuCl₄, NaAuCl₄·H₂O, InCl₃, (NH₄)₃IrCl₆, K₂IrCl₆, MgCl₂·6H₂O, NdCl₃, (NH₄)₂OsCl₆, (NH₄)₂PdCl₆, Pd(NH₃)₂Cl₂, [Pd(NH₃)]₄Cl₂·H₂O, (NH₄)₂PtCl₆, Pt(NH₃)₂Cl₂, Pt(NH₃)₂Cl₂, [Pt(NH₃)₄]Cl₂·xH₂O, [Pt(NH₃)₄][PtCl₄], K₂PtCl₄, KClO₄, K₂ReCl₆, (NH₄)₃RhCl₆, [RhCl(CO)((C₆H₅)₃P)₂], [RhCl(C₆H₅)₃P)₃], [Rh(NH₃)₅Cl]Cl₂, K₃RhCl₆, RbCl, RbClO₄, (NH₄)₂RuCl₆, [RuCl₂ ((C₆H₅)₃P)₃], {Ru(NH₃)₆}Cl₂, K₂RuCl₆, ScCl₃·xH₂O, AgCl, NaCl, TlCl, SnCl₂, and additional water adducts thereof. The organometallic compound/chloride salt may be added in an amount in the range of 0.1% by weight to 20% by weight of the colloid formed in step 210.

In some cases, additives including fillers, pigments, metals, and nanoparticulates may be added in any one or more of steps 202-212. The nanoparticulates can include nanostructured carbon (e.g., single-, double, and multi-walled nanotubes, nanographite platelets, nanocrystalline diamond, ultradisperse diamond, nanographite platelets), nanocrystals, nanopowders, nanofibers, silica aerogels, carbon aerogels, glass flakes, quantum dots, proteins (e.g., enzymes). In one example, an additive includes one or more proteins (i.e., enzymes) selected from the group consisting of lysostaphin and lysozyme. The nanoparticulates can be functionalized or non-functionalized, and of any suitable shape, dimension, or composition. Suitable functional groups include, for example, hydroxyl groups and halogens (e.g., chlorine).

Nanoparticles that can be added in steps 202-212 include, for example, nanoparticles of aluminum, aluminum nitride, aluminum oxide, antimony, antimony oxide, antimony tin oxide, barium titanate, beryllium, bismuth oxide, boron carbide, boron nitride, calcium carbonate, calcium chloride, calcium oxide, calcium phosphate, cobalt, cobalt oxide, copper, dysprosium, dysprosium oxide, erbium, erbium oxide, europium, europium oxide, gadolinium, gadolinium oxide, gold, hafnium oxide, holmium, indium, indium oxide, iridium, iron cobalt, iron, iron nickel, iron oxide, lanthanum, lanthanum oxide, lead oxide, lithium manganese oxide, lithium, lithium titanate, lithium vanadate, lutetium, magnesium, magnesium oxide, molybdenum, molybdenum oxide, neodymium, neodymium oxide, nickel, nickel oxide, nickel titanium, niobium, niobium oxide, palladium, platinum, praseodymium, praseodymium oxide, rhenium, ruthenium, samarium, samarium oxide, silicon carbide, silicon nanoparticles, silicon nanotubes, silicon nitride, silicon oxide, silver, strontium carbonate, strontium titanate, tantalum, tantalum oxide, terbium, terbium oxide, thulium, tin, tin oxide, titanium carbide, titanium, titanium nitride, titanium oxide, tungsten carbide, tungsten, tungsten oxide, vanadium oxide, ytterbium, yttria stabilized zirconia, yttrium, zinc oxide, zirconium, zirconium oxide, and any combination thereof.

In some cases, particles ranging in size from nanometers to microns, such as polycrystalline, single crystal, shaped charge microparticles, or a combination thereof, optionally coated with hybrid polymeric layers with or without self-assembled or dispersed nanoparticulates, can be added in steps 202-212. These particles include, for example, antimony selenide, antimony telluride, bismuth selenide, bismuth telluride, boron carbide, silicon carbide, tungsten carbide, gallium antimonide, gallium arsenide, gallium indium antimonide, gallium indium arsenide, gallium phosphide, gallium(II) telluride, gallium(III) telluride, germanium telluride, indium antimonide, indium arsenide, indium phosphides, indium phosphide arsenide, indium selenide, indium sulfide, indium telluride, silicon arsenide, silicon phosphides, tin arsenide, tin selenide, tin telluride, and zinc telluride.

The colloid resulting from step 212 may be heated in step 214. In some cases, the colloid is heated to a temperature in a range from room temperature up to 100°C. Heating may include autoclaving at increased or reduced pressures. For example, the colloid may be heated to a temperature between 45°C and 60°C in any one of steps 202-212 during the addition and mixed for up to 48 hrs to yield the aqueous acidic organo/siloxy/metal chloride colloid of step 102. In some cases, mixing may continue after heating has been discontinued. In some cases, after heating for up to 8 hours, the colloid may be brought to room temperature and mixed at room temperature. A pH of the colloid in step 214 may be less than 1. For example, a pH of the colloid in step 214 may be in a range between 0.01 and 0.5, or between 0.2 and 0.3.

Steps in FIG. 2 may be ordered or combined in ways other than depicted to achieve desired properties (e.g., optical properties) of a polymerizable composition or polymeric coating. For example, a first acidic solution from step 202 may be combined with one or more metal chloride salts, organometallic compounds, or a combination thereof in step 212, and a separate vehicle system may be prepared in steps 202 through 210. The vehicle system from step 210 may then be combined with the product of steps 202 and 212 in step 214 to yield an aqueous, acidic organo/siloxy/metal chloride hybrid colloid.

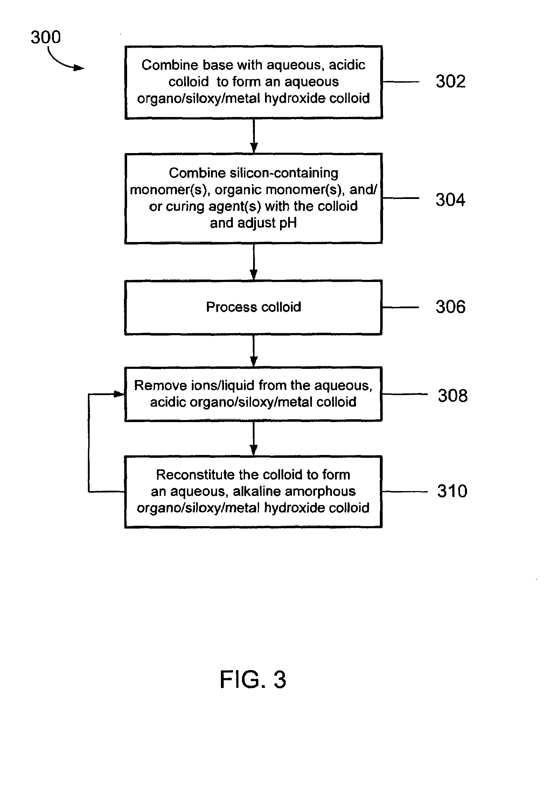

Referring to FIG. 3, procedure 300 includes steps in the processing of the aqueous, acidic organo/siloxy/metal chloride hybrid colloid to form the amorphous, aqueous organo/siloxy/metal hydroxide colloid in step 104. In step 302, the pH of the acidic colloid is increased by addition of a base. In some cases, the pH is increased slightly (e.g., to a range between about 0.2 and about 0.3). In other cases, the pH is increased more significantly (e.g., to a range between about 7 and about 14). The pH of the acidic colloid may be increased by the addition of a base such as, for example, aqueous ammonium hydroxide. The concentration of the aqueous ammonium hydroxide may be, for example, in a range from 2M to 9M. Prior to addition of the base, the acidic colloid may be at room temperature. For an acidic colloid from step 214 with a pH of 0.01, addition of 13 wt% base with a concentration in a range between 8M and 9M may increase a pH of the colloid to a range between 0.2 and 0.3. For an acidic colloid with a pH in a range between 0.2 and 0.3, addition of 1 wt% base with a concentration in a range between 8M and 9M increases a pH of the colloid to a range between 7 and 11.

In step 304, the solids content of the colloid may be increased by addition of one or more non-halo-substituted (e.g., non-chloro-substituted) silicon-containing monomers, one or more non-halo-substituted organic monomers, one or more non-halo-substituted curing agents, one or more non-halo-substituted metal-containing compounds, or any combination thereof, as described, for example, with respect to FIG. 2. At the time of the addition, the pH of the colloid may be acidic (e.g., between 0.2 and 0.3) or slightly acidic to alkaline (e.g., between 6.5 and 14) or slightly acidic or neutral to slightly alkaline (e.g., 6.5 to 8, or 7 to 7.5).

Silicon-containing monomers and/or curing agents added to the colloid when the colloid has a pH in a range between 0.2 and 0.3 form a soluble glass, as indicated by self-foaming under agitation. In some cases, step 304 includes successive addition of silicon-containing monomers and/or curing agents followed by pH adjustment, with a final addition of silicon-containing monomers and/or curing agents up to a pH of 11. After the desired increase of the solids content, a pH of the colloid may be adjusted to fall in a range between 11 and 12. 5, or between 11 and 14.

Following the addition of solids and base in step 304, the colloid may be optionally processed in step 306. Processing in step 306 may include mixing, heating, equilibrating, or any combination thereof at a temperature between room temperature and 500°C for up to 96 hrs. In some cases, heating occurs under pressure. In an example, the colloid may be heated up to 150°C, and then agitated without heating for a length of time between 8 hrs and 72 hrs. During agitation, the colloid may cool to room temperature. As used herein, agitation includes any method of mixing or dispersion, including cavitation. In some cases, the solids content (e.g., the weight of the organo/siloxy/metal components) of the alkaline colloid in step 306 exceeds the solids content of the acidic colloid following step 214 by 10% to 200%.

In step 308, the colloid is processed to remove chloride ions from the colloid. This may be achieved with a variety of methods including, for example, vacuum filtration, decantation, centrifugation, fluidized bed ion-exchange, and other physical and chemical methods, to yield a substantially chloride-ion-free amorphous solid.

In step 310, the colloid is reconstituted from the amorphous solid to yield an aqueous, alkaline amorphous organo/siloxy/metal hydroxide colloid. The colloid may be reconstituted a number of times (e.g., up to about 10 times). Reconstitution may include mixing an aqueous solution with the amorphous solid in a weight ratio of aqueous solution to amorphous solid between about 2:1 and about 4:1. To facilitate removal of ions (e.g., halide ions, such as chloride ions) from the reconstituted colloids, the aqueous solution may be essentially free of ions (e.g., water used to form the aqueous solution may be deionized). The aqueous solution may be basic, such that the colloid remains alkaline following successive reconstitutions. In some cases, for example, the aqueous solution includes aqueous ammonium hydroxide. In an example, the aqueous solution includes 2 wt% of ammonium hydroxide (e.g., 2M to 9M NH₄OH). In some cases, the aqueous solution includes a base. In an example, the base is calcium hydroxide, and an amount of calcium hydroxide added to the aqueous solution is between 0.001% and 3.5% by weight of the aqueous solution.

After a second centrifugation, the reconstituted colloidal suspension, which may be cooled through refrigeration to a temperature between 2°C and 5°C, undergoes a chemical reaction that results in self-foaming. Chloride ion concentration in the supernatant after a second centrifugation may be around 5,000 ppm.

Repeated centrifugation and reconstitution of the colloid reduces particle sizes of the amorphous solid. Centrifugation may also result in more effective removal of ions and a more homogeneous colloid than other methods, such as filtration and decantation. In an example, 750 mL of a colloid formed in step 304 is centrifuged at 4150 rpm between 8 hrs and 24 hrs at a temperature between the freezing point and up to and including the boiling point. In some cases, the colloid is cooled to 4°C during centrifugation and then allowed to equilibrate at room temperature. The resulting amorphous solid is separated, reconstituted, and then centrifuged again, for a total of up to 10 successive centrifugation steps. The centrifugation steps may be different lengths of time. In some cases, a first centrifugation step may be shorter than successive centrifugation steps. For example, a first centrifugation step may be 8 hrs in length, and successive centrifugation steps may be 24 hrs in length.

Successive centrifugation steps may result in a reduction of chloride ion concentration in the supernatant to less than 1 ppm. Reduction of chloride ion concentration may also be enhanced through the use of an ion exchange resin in step 310. The ion exchange resin may be added in an amount between 0.01 wt% and 2 wt%, or between 0.5 wt% and 0.75 wt%. A pH of the colloid resulting from step 310 is at least 8, or at least 8.4.

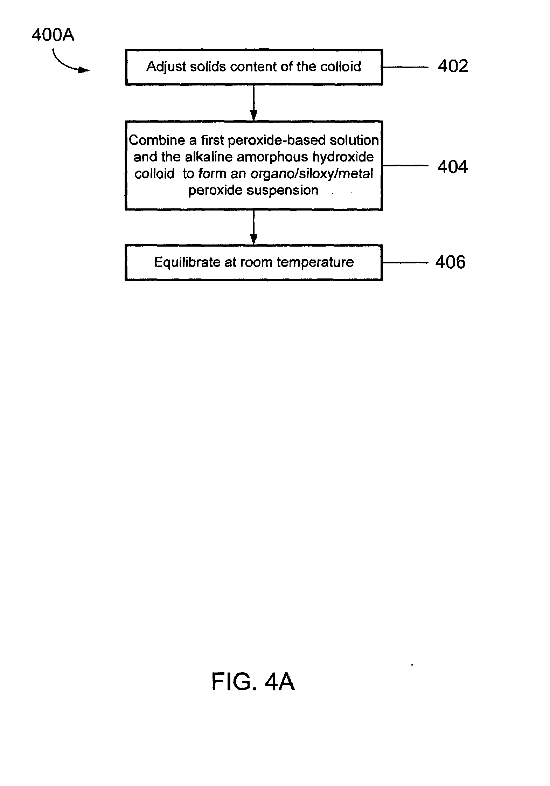

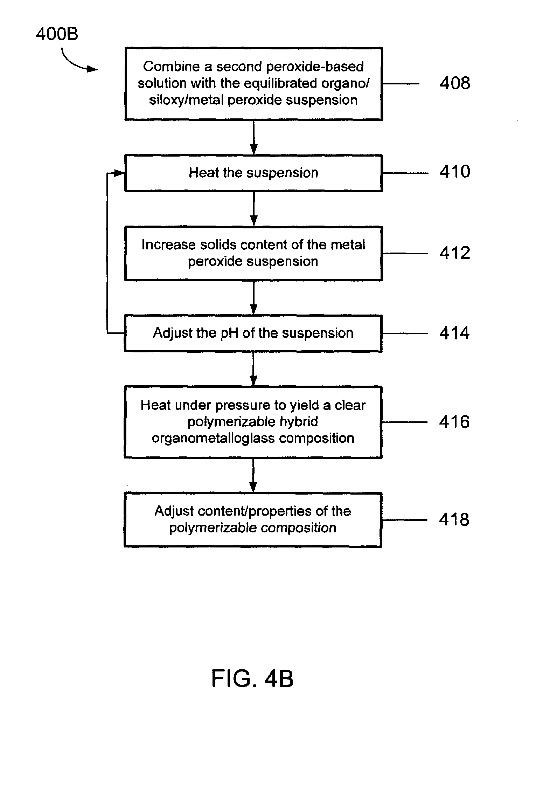

FIGS. 4A and 4B describe step 106 in more detail. Referring to FIG. 4A, procedure 400A includes steps in processing the alkaline amorphous organo/siloxy/metal hydroxide colloid of step 310 to form a polymerizable organo/siloxy/nanocrystal composition.

Step 402 includes adjusting the solids content in the alkaline amorphous organo/siloxy/metal hydroxide colloid of step 310, which may be 4 wt%. A ratio of hybrid organosiloxy to polymeric molecular hybrid nanocrystals formed in the colloid may be 1:1. Adjusting the solids content can include decreasing the solids content (e.g., by addition of water). For example, an amount of water added may be 10% to 250% by weight of the colloid. In some cases, the solids content may be increased by adding non-halogen-containing organic monomers described with respect to FIG. 2.

Step 404 includes combining a first peroxide-based solution and the alkaline amorphous organo/siloxy/metal hydroxide colloid of step 402 to form an organo/siloxy/metal peroxide suspension. The peroxide-based solution may include, for example, hydrogen peroxide, benzoyl peroxide, tert-butyl hydroperoxide, 3-chloroperoxybenzoic peroxide, di-tert-butyl peroxide, dicumyl peroxide, methylethyl ketone peroxide, [dioxybis(1-methylpropylidene)]bishydroperoxide, (1-methyl-propylidene) bishydroperoxide, peracetic acid, or any combination thereof. The strength of the peroxide-based solution may be, for example, in a range from 25% to 50%. Before addition of the peroxide-based solution, the pH of the colloid may be in a range between 6 and 10.5. A temperature of the colloid may be in a range from 1°C to room temperature before addition of the peroxide-based solution. The peroxide-based solution may be added directly to the colloid, in an amount of 0.1% to 200% by weight of the colloid. Addition of the peroxide-based solution results in an exothermic reaction, and yields an organo/siloxy/metal peroxide suspension.

In step 406, the organo/siloxy/metal peroxide colloid suspension is allowed to equilibrate at room temperature. The pH of the equilibrated suspension may be in a range from 4 to 7.5, or near neutral. Stabilization and solubilization of the system results in a substantially clear, transparent suspension after equilibration at room temperature.

In some cases, two or more different organo/siloxy/metal peroxide suspensions may be prepared through step 404 and combined in step 406. This option is suitable, for example, when some reactants (e.g., certain metal salts and silane or siloxy species), exhibit deleterious results when mixed together. In an example, a first, non-silicon-containing suspension is prepared through step 404 and a second, silicon-containing suspension is prepared through step 404. The first and second suspensions are then combined before, after, or during equilibration at room temperature in step 406.

Referring to FIG. 4B, procedure 400B includes additional steps in processing the organo/siloxy/metal peroxide colloid suspension of step 406 to form a polymerizable organo/siloxy/nanocrystal composition. Step 408 includes combining a second peroxide-based solution and the equilibrated suspension of step 406. The peroxide-based solution may be selected from the examples provided with respect to step 404. The strength of the peroxide-based solution may be, for example, in a range from 25% to 50%. The peroxide-based solution may be added directly to the suspension, in an amount of 0.1% to 200% by weight of the suspension.

Step 410 includes heating the suspension. The suspension may be heated to a temperature between room temperature and 500°C (e.g., to 150°C). The suspension may be heated for 1 hr to 10 hrs. Heating in step 410 occurs without substantial agglomeration of particles in the suspension. In some cases, heating in step 410 includes refluxing or autoclaving. Autoclaving may include pressures at, above, or below atmospheric pressure.

Step 412 includes increasing the solids content of the metal peroxide suspension. The solids content of the suspension may be increased by addition of one or more non-chloro-substituted silicon-containing monomers, one or more non-chloro-substituted organic monomers (e.g., as described with respect to step 202), one or more non-chloro-substituted curing agents, one or more non-chloro-substituted metal-containing (e.g., organometallic) compounds, or any combination thereof, as described with respect to FIG. 2. In certain cases, it may be desirable to add fluorine- or iodine-containing substances in step 412. Solids may be added in a suitable amount to achieve a desired effect. In some cases, additional solids may be added in an amount up to about 100 times the weight of solids in the peroxide suspension from step 408. In some cases, the suspension is heated in step 412.

Step 414 includes optionally adjusting (e.g., increasing or decreasing) the pH of the suspension. For example, a basic solution may be added to the suspension. In some cases, the basic solution includes ammonium hydroxide with a concentration between 0.1M and 9M. The basic solution may be added in an amount from 0.1% to 10% by weight of the suspension. In some cases, the suspension is heated in step 414.

As indicated in FIG. 4B, steps 410, 412, and 414 may be repeated one or more times. Repeating steps 410-414 one or more times allows successive addition of solids to the suspension to yield a higher solids content. Following the final step 414 (or final step 410, if steps 412 and 414 are omitted), the suspension may be allowed to equilibrate at room temperature.

In step 416, the suspension resulting from step 414 (or step 410, if steps 412 and 414 are not performed) is heated. Heating may include refluxing under pressure or autoclaving under increased or reduced pressure. Nanocrystal growth occurs during this heating process. Heating under pressure yields a clear, polymerizable organo/siloxy composition with self-assembled nanocrystals distributed throughout the composition. Step 416 may include heating at a temperature up to 500°C (e.g., to 150°C). The suspension may be heated for a length of time between 2 hrs and 20 hrs. The suspension may be heated at a pressure of 0 psi to 10 psi to 100 psi above atmospheric pressure. In some cases, the suspension may be heated at a pressure up to 75,000 psi. The resulting suspension may have a pH in a range between 5 and 10.5. In some cases, an organometallic compound is added to the suspension together with the addition of a base to adjust the pH of the suspension. For example, the additive may be combined with the suspension after the suspension is refluxed for a length of time up to 0.5 hrs, 4 hrs, 12 hrs, 20 hrs, or 24 hrs.

In step 418, the composition may be adjusted to suit the intended application. For example, a pH of the suspension may be adjusted based on the substrate to which the composition is to be applied. Optionally, one or more organic monomers, one or more silicon containing monomers, powders, curing agents, wetting agents, or any combination thereof (e.g., as described with respect to FIG. 2) may be added in step 418. Wetting agents may be used to improve hydrophobicity or wettability of the composition on some substrates, such that a thinner film of the composition can be applied to a substrate. Thinner films have advantageously reduced yellow appearance, reduced moire patterns, and reduced cure times in amounts to achieve desired attributes. Suitable wetting agents include, but are not limited to, polyethylene oxide silane, isopropyl alcohol, polar (hydrophilic) nonionic ethylene glycol functional silanes. 0.1 wt% to 10,000 wt% of solids may be added to the composition in step 418. Additives may be selected to introduce or enhance desired attributes of the final composition or coating. In some cases, the composition from step 416 may be added to another composition in step 418 to form an aqueous system with desired properties.

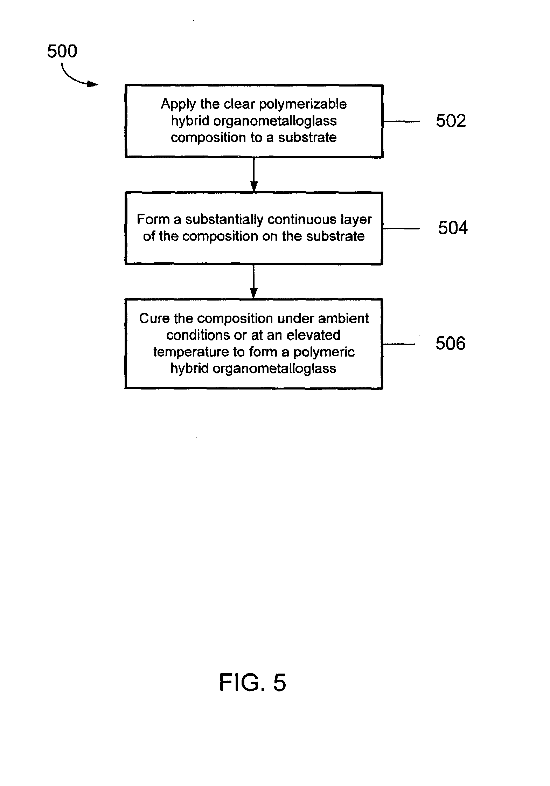

Referring to FIG. 5, procedure 500 describes applying the composition formed in procedure 400B to a substrate (step 108) and solidifying the layer on the substrate (step 110). Step 502 includes applying the clear polymerizable organo/siloxy/nanocrystal composition from step 416 or 418 to a substrate. Application may include spraying, atomic layer deposition, chemical vapor deposition, physical vapor deposition. In some cases, the composition may be heated and then applied as a vapor to a substrate. The substrate may be heated before the composition is applied. In certain cases, the composition may be sintered on the substrate.

In step 504, a substantially continuous layer of the composition is formed on the substrate. A coating can be used as a sealant to protect a substrate from the environment, or on top of a sealant as an additional coating. Examples of that can be used with the compositions described herein include porous and non-porous, transparent, translucent, and opaque substrates, such as metals, metal alloys, glass (e.g., optical glass and industrial glass), polymeric materials (e.g., thermoplastics, thermosets), textiles, building materials (e.g., concrete and vinyl), ceramics, pigments, fillers, fiber materials, electronics, carbon, graphite, ceramics, thermoplastics, thermosets, resin materials, inorganic materials, organic materials, rubber, wood, paper, waste, skin, hair, and in particular, substrates and surfaces such as surgical steel, untreated steel in medical devices, fiberglass, cement, and fiber optics.

In step 506, the composition is solidified to form a polymeric coating on the substrate. In some cases, solidifying the composition includes providing a polymerizable hybrid organometalloglass composition including an aqueous carrier and the condensation product of an organo/siloxy/nanocrystal composition, applying the composition to a surface of a substrate, and removing the aqueous carrier to form a polymeric hybrid organometalloglass coating on the surface of the substrate. The composition can be solidified under ambient conditions to form a substantially transparent polymeric coating. Ambient curing can be achieved, for example, by allowing the coating to dry in air at room temperature and atmospheric pressure. Under ambient conditions, the coating may be dry to the touch within a few hours (e.g., less than 5 hrs), and hardened in 7-10 days. A hardness of a hardened coating is at least 0.1 GPa or at least 2.5 GPa (e.g., between the modulus of polycarbonate (0.48 GPa) and glass (7 GPa)) or between 0.1 GPa and 7 GPa or between 2.5 GPa and 7 GPa. The composition can also be solidified by heating to form a polymeric coating on the substrate. In some cases, a polymerizable hybrid organometalloglass composition is spray-dried (e.g., at elevated temperatures) to form a polymeric hybrid organometalloglass powder. Visible or UV radiation may be used to facilitate polymerization of a hybrid organometalloglass composition. In some cases, a polymeric hybrid organometalloglass coating is treated (e.g., with electromagnetic radiation, heat, pressure, etc.) after curing to alter chemical and/or physical properties of the coating.

The coating formed in step 506 can be of monolayer thickness on the order of nanometers. In some implementations, a thickness of the coating is 2-10 nm, 3-8 nm, or 4-6 nm. In other applications, a coating can have a thickness of 10 nm to 1 µm. For instance, a coating can have a thickness of 10 nm to 800 nm, 100 nm to 600 nm, or 200 nm to 500 nm. These coatings are continuous, covalently bonded, cross-linked, cured polymeric films, with no visible presence of agglomerated, non-continuous particles. In some implementations, a viscosity of a composition formed in step 418 is adjusted to form a thicker layer or coating, for instance, on the order of microns or thicker. Repeated application of one or more compositions can result in a coating of a desired thickness and with a desired number of layers (e.g., laminates) with the same or different functionality. In one example, a composition formed in step 418 is used as an intermediate layer between a substrate and a coating or between two layers on a substrate. The intermediate layer may serve as an adhesion layer to provide intercoat adhesion properties.

The organo-siloxy peroxy-metal-hydroxy nanocrystalline or polymeric hybrid organometalloglass coatings described herein respond to heat as an organic glass polymer and do not powder up and loose adhesion, but rather maintain clarity and film forming characteristics at temperatures up to, for example, 1000°C. These coatings can be boiled in water for up to an hour and still retain their adhesion and hardness.

The polymeric coating is both organic and inorganic in nature, and can have both hydrophilic and hydrophobic character. That is, the hybrid nanocrystals in the coating provide hydrophilic character, while the polymerized organo/siloxy network provides hydrophobic character. In some cases, the dual nature of this coating allows for a photoactive response in a portion of the coating near the surface (e.g., within one to a few nanometers of the surface), rather than throughout the entire depth of the coating. The hydrophobic nature of the polymerized organo/siloxy network inhibits water from infiltrating the entire depth of the coating, and thus reduces retention of foreign matter (e.g., dirt) in the coating and allows water to sheet off the surface. In some cases, based on additives included in the process shown in FIGS. 2-5, the polymerized organo/siloxy network is hydrophilic. Compositions described herein can be formulated for a wide range of high to low critical surface tensions such as coatings with superhydrophilic, superhydrophobic, or oleophobic properties. In some cases, the polymeric coating is superhydrophobic and substantially free from hybrid nanocrystals. These super hydrophobic coatings can be extremely hard and exhibit little or no photocatalytic activity.

Implementations of the process and chemistry illustrated in FIGS. 1-5 can be used to yield a variety of compositions and coatings. In some cases, nanocrystals may be self-assembled in an organosiloxy matrix. The nanocrystals may include oxides of metals and semi-conductors such as titanium (e.g., anatase), tin, zirconium, silicon, vanadium, cobalt, etc., or any hybrid or combination thereof. In some cases, polymeric molecular hybrid nanocrystals may be self-assembled in an organosiloxy matrix. In certain cases, a combination of nanoparticles may be dispersed in an organosiloxy hybrid polymer matrix, either with or without self-assembled nanocrystals or polymeric molecular hybrid nanocrystals grown in the matrix. In other cases, an organosiloxy polymer matrix may be formed in the absence of nanocrystals, including self-assembled nanocrystals (e.g., hybrid or singular), added (e.g., dispersed) nanocrystals, and polymeric molecular hybrid nanocrystals.

In some implementations, the amorphous organo/siloxy/metal hydroxide colloidal suspension composition formed in step 402 is applied directly to a surface to form a coating on the surface, as depicted by steps 504 and 506. In other implementations, the amorphous organo/siloxy/metal hydroxide colloidal suspension composition formed in step 402 can be stored at room temperature for later use, dried to form a powder, vaporized to form a vapor, or applied to a surface, as depicted in step 504, dehydrated (for instance, spray dried) and collected as a powder to be used in nanopowder or nanocomposite powder form.

In some implementations, clear polymerizable organo/siloxy/nanocrystal compositions of 0.005% to 10% stabilized solids dispersed in water can be dried and processed to form nanocomposite powder particulates less than about 100 nm in diameter. These nanopowders or nanocomposite powders can be combined with another hybrid organometalloglass composition (for example, in steps 202 to 212 and/or steps 304, 402, 412, or 418) or other dispersions to improve mechanical, physical, and/or chemical properties of, for example, thermosets, thermoplastic extrusions, organic pigment dispersions, etc. Organo/siloxy/nanocrystal composite powders can be bonded to particulate substrates that are not readily dispersed into the composition or into a organo/siloxy/nanocrystal vehicle system to facilitate dispersion of the particulate substrates. In some cases, organo/siloxy/nanocrystal composite powders are bonded to particles not readily dispersed in, for example, thermoset or thermoplastic systems, to facilitate dispersion of the particles in the systems.

Amorphous organo/siloxy/metal hydroxide colloids (e.g., from steps 302, 304, 310, and 402) and polymerizable organo/siloxy/nanocrystal compositions (e.g., from steps 406, 416, and 502) may be used as coatings, sealants, supercritical fluids, heterogeneous or homogeneous dispersions, and/or powders. The compositions may be applied on, integrated in, or bound to a substrate. In some cases, these compositions may be homogenously or heterogeneously dispersed in liquids. In certain cases, the supercritical fluid compositions may be dispersed in other supercritical fluid compositions.

Substrates can be treated with selected hybrid organometalloglass compositions to enhance or impart catalytic, photocatalytic, self-cleaning, anti-microbial, anti-viral, anti-fungal, anti-corrosive, anti-fouling, semi-conductive, conductive, insulative, electromagnetic, transparent, optical, emissive, flame retardant, piezoelectric properties, refractory properties, abrasion resistance, or any combination thereof, to the substrate. The hydrophobic siloxy nanothin coatings described herein can be used to inhibit the contamination of polymeric, metallic, and cementitious substrates with microbial and viral infusions through the glassy surface. These coatings inhibit exposure of a coated substrate to oxidizing agents, and therefore inhibit subsequent degradation of the coated polymeric substrates.

Composition and thickness of a hybrid organometalloglass coating can be selected to achieve suitable values for properties such as insulating and dielectric properties (high and low dielectric constant), anti-static properties, infrared absorbance, selected (e.g., low or high) coefficients of friction, conductivity, refractive index, transparency, and reactivity. These coatings can be used in applications including thermoset-thermoplastic reinforcement, pigment dispersion, hydrogen storage, electrochemical and superconducting applications, preparation of light-sensitive photographic materials, and absorption of UV radiation.

Coatings formed from the compositions described herein can be instrumental in air/water remediation applications, bio-medical applications, electrical applications, and surface studies. Another use includes coatings suitable for controlling or containing radioactive contamination by providing a neutron absorbing material to a radioactive contamination site. Compositions used herein can also be used to form clear, electrically conductive films that can be used in field effect transistors, and electrodes. Solidified matrix materials described herein can be used as high-k dielectric gate material, capacitors, high thermal conductivity coatings, coatings transparent to infrared radiation, coatings that exhibit light-emitting and conductive properties, films with catalytic and/or photoreducing properties, powders or films with fire-retardant properties, as dielectrics in film capacitors and as gate insulators in LSI circuits requiring low leakage voltage characteristics, opacifying agents, powders with anti-reflective and/or interference properties, high-k films, and heat and thermal shock resistance enhancers. These films are also useful in electronic ceramics, thermistors, varistors, cermets, resistance heating elements, ceramic glazes, enamels, pigments, magnetic devices, ceramic capacitors, glazes, and colored glass, barriers for the penetration of corrosive elements and ultraviolet light, cements, fertilizers, and gas-scrubbing applications

Polymeric hybrid organometalloglass compositions described herein may be used in devices such as dye-sensitized solar cells, super capacitor thin films, electrical devices, optics, electro-optics, acousto-optics, laser optics, opto-electronic devices, gas-sensing devices, catalytic devices, electrochemical and superconducting devices, ceramics, capacitors, thin-film capacitors, hybrid circuits, semiconductor components, heterogeneous catalyst supports, microsensors (e.g., for MEMS technology), particle detectors, nanofilm composites for electronic devices, with a layer succession of metal-insulator-metal or metal-insulator-semiconductor used as memory cells in memory devices such as DRAMs (dynamic random access memory) or as passive components in high-frequency applications, electrochemical devices and displays, batteries, high refractory thin film crucible linings, resistive elements in integrated circuits, sputtering targets, conductive inks, display applications (e.g., flat panel, plasma, electroluminescent, electrochromic, field emission, etc.), and gas permeable inorganic membranes.

Compositions described herein may be used as additives for bricks, pigments, mortars, refractories, abrasives, adhesives, cement, slag adjustors, ceramics (including dielectric, ferroelectric, and conductive ceramics), aluminum chemicals, flame retardants, fillers, welding fluxes, adsorbents, adhesives, detergent zeolites, transducers (e.g., for loudspeakers and microphones), glasses, X-ray image intensifying screens, phosphors, raw materials for various fluorescent compounds, absorption material in atomic reactions, magnetic bubble material, screen-sensitivity increasing material, semiconductor electronics, piezoelectric resonators and transducers, and gate oxides.

Components such as silver may be incorporated into compositions described herein to improve biostatic efficacy of a coating. In some cases, nanothin siloxy layers may be used as nanothin glass barriers to limit exposure of an underlying substrate to hot water, oxygen plasma, ozone, peroxides, oxides, organic acids, and oxidizing flames. These lightweight, nanothin siloxy layers provide toughness, including stain and scratch resistance, as well as flexibility, and may be stored on rolls and molded packaging. The layers are substantially impermeable to gas and moisture, and demonstrate good adhesion to polymeric substrates.

The siloxy coatings described herein can be formulated to protect a variety of metal substrates from anodic and cathodic electrochemical transport, thus inhibiting the electrochemical circuit required for corrosion, including galvanic corrosion, concentration cell corrosion, oxygen concentration cell corrosion, filiform corrosion, metal ion concentration cell corrosion, active/passive corrosion cells, intergranular corrosion, exfoliation corrosion, and metallic mercury corrosion.

## Claims

1. A method of making a polymerizable hybrid organometalloglass composition comprising:
(a) forming an aqueous, acidic colloid comprising an organic monomer, a silicon-containing compound, and an organometallic compound;
(b) processing the aqueous, acidic colloid to form an aqueous, alkaline colloid;
(c) processing the aqueous, alkaline colloid to remove chloride ions from the colloid and to form an aqueous, alkaline amorphous organo/siloxy/metal hydroxide colloid;
(d) combining a peroxide-based solution with the aqueous, alkaline amorphous organo/siloxy/metal hydroxide colloid to form a suspension comprising metal peroxide; and
(e) processing the metal peroxide suspension to form a polymerizable hybrid organometalloglass composition.

2. The method of claim 1, wherein forming the aqueous, acidic colloid comprises heating an acidic solution comprising the organic monomer, the organometallic compound, or a combination thereof.

3. The method of claim 1 or claim 2, wherein processing the aqueous, acidic colloid comprises adding a base to the aqueous, acidic colloid and/or heating the colloid and/or combining a second peroxide-based solution with the metal peroxide suspension.

4. The method of any of claims 1 to 3, wherein processing the aqueous, alkaline colloid comprises heating the aqueous, alkaline colloid.

5. The method of any of claims 1 to 4, wherein processing the metal peroxide suspension comprises heating the suspension.

6. The method of any of claims 1 to 5, wherein processing the aqueous, alkaline colloid comprises cooling the aqueous, alkaline colloid.

7. The method of any of claims 1 to 6, wherein processing the metal peroxide suspension comprises heating and forming self-assembled nanocrystals in the suspension.

8. The method of claim 1, wherein processing the aqueous, alkaline colloid to remove chloride ions from the colloid comprises a method selected from the group consisting of vacuum filtration, decantation, centrifuging, and deionizing in a fluidized bed and reconstituting the colloid repeatedly until a concentration of chloride ions in the supernatant is less than 2 ppm.

9. The method of claim 8, wherein reconstituting the colloid comprises reconstituting the colloid in the presence of an ion exchange resin.

10. The method of any of claims 1 to 9, wherein the aqueous, acidic colloid further comprises a metal chloride.

11. A method comprising the method of any of claims 1 to 10, and further comprising applying the polymerizable hybrid organometalloglass composition to a substrate, and polymerizing the composition to form a polymeric hybrid organometalloglass coating on the substrate.

12. The method of claim 11, wherein the substrate comprises a multiplicity of particles.

13. The method of claim 11 or claim 12, wherein polymerizing the hybrid organometalloglass composition comprises allowing the composition to dry in air at room temperature.

14. A substrate coated with the polymerizable hybrid organometalloglass composition made according to the method of any one of the preceding claims.

15. The substrate of claim 14, wherein the polymerizable hybrid organometalloglass composition is an intermediate layer between the substrate and another layer or between two layers on the substrate.

## Patentansprüche

1. Eine Methode zur Herstellung einer polymerisierbaren, hybriden organometallischen Glaszusammensetzung, bestehend aus:
(a) der Bildung eines wässrigen, sauren Kolloids, bestehend aus einem organischen Monomer, einer silikonhaltigen Verbindung und einer organometallischen Verbindung;
(b) der Verarbeitung des wässrigen, sauren Kolloids zu einem wässrigen, alkalischen Kolloid;
(c) der Verarbeitung des wässrigen, alkalischen Kolloids, um Chloridionen aus dem Kolloid zu entfernen und ein wässriges, alkalisch amorphes Organo-/Siloxy-/Metallhydroxid Kolloid zu bilden;
(d) der Mischung einer Peroxid-basierten Lösung mit dem wässrigen, alkalisch amorphen Organo-/Siloxy-/Metallhydroxid Kolloid, um eine Suspension, bestehend aus Metallperoxid zu bilden; und
(e) der Verarbeitung der Metallperoxid-Suspension, um eine polymerisierbare, hybride organometallische Glaszusammensetzung zu bilden.

2. Die Methode in Anspruch 1, wobei die Bildung des wässrigen, sauren Kolloids das Erhitzen einer sauren Lösung, bestehend aus dem organischen Monomer, der organometallischen Verbindung oder einer Kombination daraus, umfasst.

3. Die Methode in Anspruch 1 oder Anspruch 2, wobei die Verarbeitung des wässrigen, sauren Kolloids das Hinzufügen einer Base zum wässrigen, sauren Kolloid und/oder das Erhitzen des Kolloids und/oder das Mischen einer zweiten Peroxid-basierten Lösung mit der Metallperoxid-Suspension, umfasst.

4. Die Methode in einem der Ansprüche 1 bis 3, wobei die Verarbeitung des wässrigen, sauren Kolloids das Erhitzen des wässrigen, alkalischen Kolloids umfasst.

5. Die Methode in einem der Ansprüche 1 bis 4, wobei die Verarbeitung der Metallperoxid-Suspension das Erhitzen der Suspension umfasst.

6. Die Methode in einem der Ansprüche 1 bis 5, wobei die Verarbeitung des wässrigen, alkalischen Kolloids das Abkühlen des wässrigen, alkalischen Kolloids umfasst.

7. Die Methode in einem der Ansprüche 1 bis 6, wobei die Verarbeitung der Metallperoxid-Suspension die Reaktion und Bildung selbstassemblierter Nanokristalle in der Suspension umfasst.

8. Die Methode in Anspruch 1, wobei die Verarbeitung des wässrigen, alkalischen Kolloids zur Entfernung der Chloridionen aus dem Kolloid eine Methode umfasst, die aus der Gruppe, bestehend aus Vakuumfiltration, Absetzklärung, Zentrifugierung und Entionisierung in einem Fluidisierungsbad und wiederholte Wiederherstellung des Kolloids, bis die Konzentration der Chloridionen im Überstand unter 2 ppm liegt, ausgewählt ist.

9. Die Methode in Anspruch 8, wobei die Wiederherstellung des Kolloids das Wiederherstellen des Kolloids in Gegenwart eines Ionenaustauschharzes umfasst.

10. Die Methode in einem der Ansprüche 1 bis 9, wobei das wässrige, saure Kolloid darüberhinaus ein Metallchlorid umfasst.

11. Eine Methode, bestehend aus der Methode in einem der Ansprüche 1 bis 10, und darüberhinaus bestehend aus der Anwendung der polymerisierbaren, hybriden organometallischen Glaszusammensetzung auf ein Substrat, und Polymerisierung der Zusammensetzung, um eine polymere, hybride organometallische Glasbeschichtung auf dem Substrat zu bilden.

12. Die Methode in Anspruch 11, wobei das Substrat eine Vielzahl an Partikeln umfasst.

13. Die Methode in Anspruch 11 oder Anspruch 12, wobei die Polymerisierung der hybriden organometallischen Glaszusammensetzung das Trocknen der Zusammensetzung an der Luft bei Raumtemperatur umfasst.

14. Ein Substrat, beschichtet mit der polymerisierbaren, hybriden organometallischen Glaszusammensetzung, hergestellt gemäß der Methode in einem der vorhergehenden Ansprüche.

15. Das Substrat in Anspruch 14, wobei die polymerisierbare, hybride organometallische Glaszusammensetzung eine Zwischenschicht zwischen dem Substrat und einer weiteren Schicht oder zwischen zwei Schichten auf dem Substrat ist.

## Revendications

1. Un procédé de fabrication d'une composition de verre organométallique hybride polymérisable comprenant :
(a) la formation d'un colloïde acide aqueux contenant un monomère organique, un composé contenant du silicium et un composé organométallique,
(b) le traitement du colloïde acide aqueux de façon à former un colloïde alcalin aqueux,
(c) le traitement du colloïde alcalin aqueux de façon à retirer des ions de chlorure du colloïde et à former un colloïde organo/siloxy/hydroxyde métallique amorphe aqueux,
(d) la combinaison d'une solution à base de peroxyde avec le colloïde organo/siloxy/hydroxyde métallique amorphe aqueux de façon à former une suspension contenant un peroxyde métallique, et
(e) le traitement de la suspension de peroxyde métallique de façon à former une composition de verre organométallique hybride polymérisable.

2. Le procédé selon la Revendication 1, où la formation du colloïde acide aqueux comprend le chauffage d'une solution acide contenant le monomère organique, le composé organométallique ou une combinaison de ceux-ci.

3. Le procédé selon la Revendication 1 ou 2, où le traitement du colloïde acide aqueux comprend l'ajout d'une base au colloïde acide aqueux et/ou le chauffage du colloïde et/ou la combinaison d'une deuxième solution à base de peroxyde avec la suspension de peroxyde métallique.

4. Le procédé selon l'une quelconque des Revendications 1 à 3, où le traitement du colloïde alcalin aqueux comprend le chauffage du colloïde alcalin aqueux.

5. Le procédé selon l'une quelconque des Revendications 1 à 4, où le traitement de la suspension de peroxyde métallique comprend le chauffage de la suspension.

6. Le procédé selon l'une quelconque des Revendications 1 à 5, où le traitement du colloïde alcalin aqueux comprend le refroidissement du colloïde alcalin aqueux.

7. Le procédé selon l'une quelconque des Revendications 1 à 6, où le traitement de la suspension de peroxyde métallique comprend le chauffage et la formation de nanocristaux auto-assemblés dans la suspension.

8. Le procédé selon la Revendication 1, où le traitement du colloïde alcalin aqueux de façon à retirer des ions de chlorure du colloïde comprend un procédé sélectionné dans le groupe se composant de filtrage sous vide, décantation, centrifugation et déionisation dans un lit fluidisé, et la reconstitution du colloïde de manière répétée jusqu'à ce qu'une concentration d'ions de chlorure dans le surnageant soit inférieure à 2 ppm.

9. Le procédé selon la Revendication 8, où la reconstitution du colloïde comprend la reconstitution du colloïde en présence d'une résine échangeuse d'ions.

10. Le procédé selon l'une quelconque des Revendications 1 à 9, où le colloïde acide aqueux contient en outre un chlorure métallique.

11. Un procédé comprenant le procédé selon l'une quelconque des Revendications 1 à 10 et comprenant en outre l'application de la composition de verre organométallique hybride polymérisable à un substrat, et la polymérisation de la composition de façon à former un revêtement de verre organométallique hybride polymère sur le substrat.

12. Le procédé selon la Revendication 11, où le substrat contient une pluralité de particules.

13. Le procédé selon la Revendication 11 ou 12, où la polymérisation de la composition de verre organométallique hybride comprend le fait de laisser la composition sécher à l'air à température ambiante.

14. Un substrat enduit avec la composition de verre organométallique hybride polymérisable fabriqué selon le procédé de l'une quelconque des Revendications précédentes.

15. Le substrat selon la Revendication 14, où la composition de verre organométallique hybride polymérisable est une couche intermédiaire entre le substrat et une autre couche ou entre deux couches sur le substrat.
